# EUROPÄISCHE PATENTSCHRIFT

(11) **EP 0 659 308 B1**
(45) Veröffentlichungstag und Bekanntmachung des Hinweises auf die Patenterteilung: **29.05.1996**
(21) Anmeldenummer: 93918770.4
(22) Anmeldetag: 09.09.1993
(51) Int. Cl.: H02K 9/19

(54) **ELEKTRISCHE MASCHINE**
ELECTRIC MOTOR
MOTEUR ELECTRIQUE

(30) Priorität: 10.09.1992 AT 1807/92
(43) Veröffentlichungstag der Anmeldung: 28.06.1995
(73) Patentinhaber: ELIN Motoren Gesellschaft m.b.H., A-1141 Wien (AT)
(72) Erfinder: BERGER, Josef, A-1210 Wien (AT)
(74) Vertreter: Krause, Peter
(86) Internationale Anmeldenummer: AT9300140
(87) Internationale Veröffentlichungsnummer: WO9406196

(56) Entgegenhaltungen:
- WO-A-90/09053
- DE-A- 3 043 992
- FR-A- 1 136 444
- FR-A- 1 163 764
- GB-A- 1 019 804
- US-A- 3 060 335

## Beschreibung

Die Erfindung betrifft eine elektrische Maschine, bestehend aus einem Stator, einer rotierenden Welle, mit auf dieser starr befestigtem Rotor und einem Gehäuse in dem der Stator befestigt ist und wobei das Gehäuse beidseitig ein Lagerschild aufweist, in welchem je ein Wälzlager befestigt ist, über die die mit einem Wellenstummel versehene Welle gelagert ist, die über das betriebsseitige Lager hinausragt und eine zentrische Bohrung aufweist, in der zentrisch ein Rohr befestigt ist, und am Ende der Welle beim betriebsseitigen Lager außerhalb des Maschinengehäuses eine am Lagerschild befestigte Einrichtung vorgesehen ist, über die Kühlflüssigkeit, vorzugsweise Wasser in das Rohr gelangt und über den Raum zwischen Rohr und Bohrung zurückfließt.

Bei elektrischen Maschinen entsteht Verlustwärme die abgeführt werden muß. Dies kann durch Frischluftkühlung erfolgen, wobei man dabei Selbstkühlung durch Luftbewegung oder Strahlung ohne Zuhilfenahme eines Lüfters, Eigenlüftung durch einen am Läufer angebrachten oder von ihm angetriebenen Lüfter und Fremdkühlung unmittelbar durch Fremdluft, unterscheidet. Die Wirkung der Selbstkühlung und der Eigenlüftung ist von der Drehzahl der Maschine, wobei die Fremdkühlung davon unabhängig ist. Weiters ist auch eine unmittelbare Wasserkühlung durch in Rohren im Gehäuse fließendes Wasser möglich, welche ebenfalls drehzahlunabhängig ist. Eine andere Kühlungsart ist die Kreislaufkühlung, bei der das Kühlmittel z.B. Luft, Wasserstoff o.dgl. im Kreislauf durch die Maschine und einen Wasser- oder Luftkühler strömt. Die Kreislaufkühlung kann drehzahlabhängig oder drehzahlunabhängig ausgeführt werden.

In der GB-A-1 019 804 ist die Kühlung der Rotorwelle bei einer hochtourigen elektrischen Maschine Beschrieben. Dabei weist die Welle eine Durchgangsbohrung auf, in der zentrisch ein Rohr fixiert ist. Ein eigener Teil mit radialen Bohrungen zur Befestigung des Rohres in der Durchgangsbohrung und zum Verschließen des Rohres und der Durchgangsbohrung auf einer Seite ist hier notwendig. Dieser Teil erfordert aufgrund der Bohrungen einen hohen Bearbeitungsaufwand. Weiters ist auch die Abdichtung dieses Teiles in der Bohrung, bei Verwendung von flüssigem Kühlmittel, sicher problematisch.

Bei den Rotorwellenkühlungen in der WO-A-90/09053 und der FR-A-1 163 764 weist die Welle ebenfalls eine Durchgangsbohrung auf, die auf einer Seite mit einem Teil verschlossen ist.

Die Aufgabe der Erfindung besteht nun darin, die im Rotor entstehende Verlustwärme optimal abzuführen.

Die Aufgabe wird durch die Erfindung gelöst, welche dadurch gekennzeichnet ist, daß die zentrische Bohrung in der Welle vom betriebsseitigen Lager bis nahe dem antriebseitigen Lager reicht, und daß das Rohr in einem Sackloch am Grund der Bohrung befestigt ist, wobei das Rohr im Bereich des Grundes der Bohrung mindestens eine seitliche Bohrung aufweist. Dadurch wird die in der Rotorwicklung und im Rotor vorhandene Verlustwärme, die sich auf die Welle überträgt auf einfache Weise abgeführt. Diese Rotorwellenkühlung ist in der Herszeilung wesentlich einfacher als die bekannten. Weiters sind aucn keine Probleme mit der Abdichtung bei Verwendung von flüssigem Kühlmittel zu erwarten.

Von Vorteil ist, daß das Rohr durch mindestens zwei in einem Abstand auf das Rohr aufgeschobene Scheiben mit axialen Löchern zentrisch in der Bohrung befestigt ist. Dies ist eine mögliche und einfache Art der Zentrierung des Rohres in der Böhrung. Die achsialen Löcher sind für den Rückfluß der Kühlflüssigkeit notwendig.

Bei einem geringen Abstand zwischen Rohr und Bohrung sind Stege gegenüber der Scheibe vorzuziehen, da dann die Löcher in der Scheibe für einen Durchfluß zu klein wären.

Die am Lagerschild befestigte Einrichtung weist einen Zu- und einen Ablauf für die Kühlflüssigkeit auf, und ist über eine Gleitringdichtung gegenüber der Welle abgedichtet. Durch die Gleitringdichtung wird verhindert, daß elektrisch leitende Teile der Maschine mit der Kühlflüssigkeit in Berührung kommen, wodurch auch eine Zerstörung der Maschine verhindert wird.

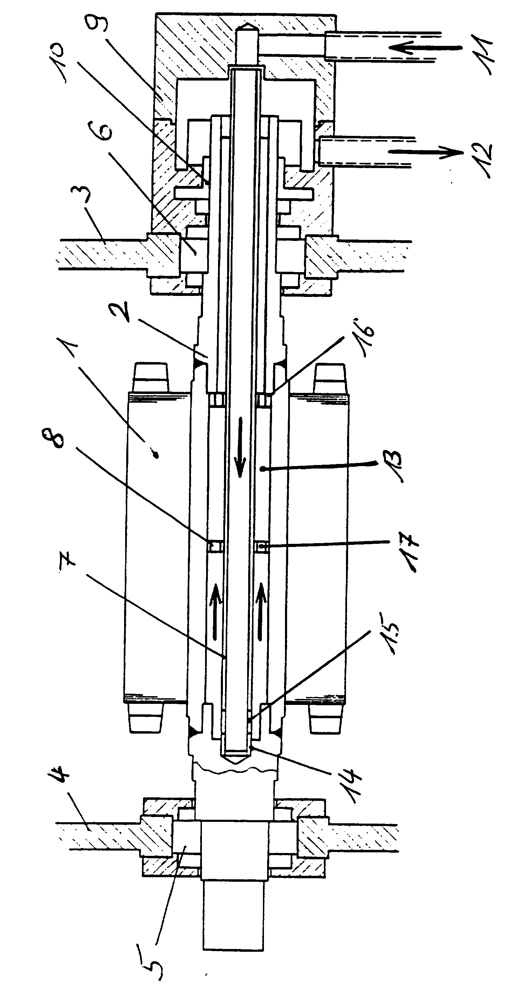

An Hand der zeichnung wird die Erfindung nun noch näher erläutert.

Die Fig. zeigt einen Schnitt durch die elektrische Maschine, wobei der Stator und das angrenzende Gehäuse nicht dargestellt sind.

Die erfindungsgemäße elektrische Maschine besteht wie allgemein bekannt aus einem Stator, einer rotierenden Welle 2, mit auf dieser starr befestigtem Rotor 1 und einem Gehäuse in dem der Stator befestigt ist. Das Gehäuse weist beidseitig ein Lagerschild 3, 4 auf, in denen je ein Wälzlager 5, 6 befestigt ist, über welche die mit einem Wellenstummel versehene Welle 2 gelagert ist.

Die Welle 2 ragt über das betriebsseitige Lager 6 hinaus und weist von dieser Seite eine zentrische Bohrung 13 bis nahe dem antriebsseitigen Lager 5 auf. In der Bohrung 13 ist zentrisch ein Rohr 7 befestigt, welches in ein Sackloch 14 am Bohrgrund gesteckt ist. Im Bereich des Bohrgrundes weist das Rohr 7 eine seitliche Bohrung 15 auf. Am Ende der Welle 2 beim betriebsseitigen Lager 6 außerhalb des Maschinengehäuses ist am Lagerschild 3 eine Einrichtung 9 befestigt, über die Kühlflüssigkeit, welche Wasser ist, in das Rohr 7 gelangt und über den Raum zwischen Rohr 7 und Bohrung 13 zurückfließt.

Das Rohr 7 ist durch zwei in einem Abstand auf das Rohr 7 aufgeschobene Scheiben 8, 16 mit axialen Löchern 17 in der Bohrung befestigt. Es kann aber auch durch je zwei an zwei Stellen am Umfang in Längsrichtung am Rohr 7 befestigter Stege zentrisch in der Bohrung 13 gehalten werden.

Die Einrichtung 9 besitzt einen Zu- 11 und einen Ablauf 12 für die Kühlflüssigkeit und ist über eine Gleitringdichtung 10 gegenüber der Welle 2 abgedichtet.

## Patentansprüche

1. Elektrische Maschine, bestehend aus einem Stator, einer rotierenden Welle (2), mit auf dieser starr befestigtem Rotor (1) und einem Gehäuse in dem der Stator befestigt ist und wobei das Gehäuse beidseitig ein Lagerschild (3, 4) aufweist, in welchem je ein Wälzlager (5, 6) befestigt ist, über die die mit einem Wellenstummel versehene Welle (2) gelagert ist, die über das betriebsseitige Lager (6) hinausragt und eine zentrische Bohrung (13) aufweist, in der zentrisch ein Rohr (7) befestigt ist, und am Ende der Welle (2) beim betriebsseitigen Lager (6) außerhalb des Maschinengehäuses eine am Lagerschild (3) befestigte Einrichtung (9) vorgesehen ist, über die Kühlflüssigkeit, vorzugsweise Wasser in das Rohr (7) gelangt und über den Raum zwischen Rohr (7) und Bohrung (13) zurückfließt, **dadurch gekennzeichnet**, daß die zentrische Bohrung (13) in der Welle (2) vom betriebsseitigen Lager (6) bis nahe dem antriebseitigen Lager (5) reicht, und daß das Rohr (7) in einem Sackloch (14) am Grund der Bohrung (13) befestigt ist, wobei das Rohr (7) im Bereich des Grundes der Bohrung (13) mindestens eine seitliche Bohrung (15) aufweist.

2. Elektrische Maschine nach Anspruch 1, **dadurch gekennzeichnet**, daß das Rohr (7) durch mindestens zwei in einem Abstand auf das Rohr (7) aufgeschobene Scheiben (8, 16) mit axialen Löchern (17) zentrisch in der Bohrung (13) befestigt ist.

## Claims

1. Electrical machine, constituted of a stator, a rotating shaft (2), with a rotor (1) fixed rigidly on this shaft and a crankcase (1) in which the stator is fixed and the crankcase presenting on either side a bearing shild (3, 4), in each of which is fixed a rolling bearing (5, 6), by the intermediary of which journals the shaft (2) which is provided an end of shaft and that emerges the bearing (6) situated on the exploitation side and presents a bore (13) centered in which is fixed centrally a tube (7) and the extremity of the shaft (2), for the bearing (6) situated the exploitation side, is provided outside of the machine crankcase a device (9), fixed on the bearing shild (3), and through which a coolant fluid, preferably water, arrives in the tube (7) and returns by passing by the space constituted between the tube (7) and the bore (13), characterized in that the central bore (13) spared in the shaft (2) of the bearing (6) situated ond the exploitation side arrives close to the bearing (1) situated on the driving side, and in that the tube (7) is fixed in an blind hole (14) spared to the bottom of the bore (13), the tube (7) presenting in the zone of the bottom of the bore (13) at least a lateral bore (15).

2. Electrical machine according to the claim 1, characterized in that the tube (7) is fixed centrally in the bore (13) by mean of at least two discs (8, 16) threaded from a distance on the tube (7) and presenting axial holes (17).

## Revendications

1. Machine électrique, constituée d'un stator, d'un arbre tournant (2), avec un rotor (1) fixé rigidement sur cet arbre et un carter (1) dans lequel le stator est fixé et le carter présentant de part et d'autre un flasque de palier (3, 4) dans chacun desquels est fixé un palier à roulement (5, 6), par l'intermédiaire duquel tourillonne l'arbre (2) qui est pourvu d'un bout d'arbre et qui sort du palier (6) situé côté exploitation et présente un perçage (13) centré dans lequel est fixé centralement un tube (7) et l'extrémité de l'arbre (2), pour le palier (6) situé du côté exploitation, est prévue à l'extérieur du carter machine un dispositif (9), fixé sur le flasque de palier (3) et par l'intermédiaire duquel un liquide de refroidissement, de préférence de l'eau, arrive dans le tube (7) et retourne en passant par l'espace constitué entre le tube (7) et le perçage (13), caractérisée en ce que le perçage central (13) ménagé dans l'arbre (2) du palier (6) situé côté exploitation arrive jusqu'à proximité du palier (1) situé du côté entraînement, et en ce que le tube (7) est fixé dans un trou borgne (14) ménagé au fond du perçage (13), le tube (7) présentant dans la zone du fond du perçage (13) au moins un perçage latéral (15).

2. Machine électrique selon la revendication 1, caractérisée en ce que le tube (7) est fixé centralement dans le perçage (13) à l'aide d'au moins deux disques (8, 16) enfilés à distance sur le tube (7) et présentant des trous (17) axiaux.
